(19) Europäisches Patentamt
European Patent Office
Office européen des brevets

(11) **EP 1 759 946 B1**

(12) **EUROPÄISCHE PATENTSCHRIFT**

(45) Veröffentlichungstag und Bekanntmachung des Hinweises auf die Patenterteilung:
**13.05.2009 Patentblatt 2009/20**

(51) Int Cl.:
***B60T 8/1755*** *(2006.01)*

(21) Anmeldenummer: 06118459.4

(22) Anmeldetag: **04.08.2006**

(54) **Fahrdynamik-Regelsystem für ein Kraftfahrzeug mit einem System zur beliebigen Veränderung der Antriebsmomentverteilung zwischen den beiden angetriebenen Rädern einer Achse**

Vehicle dynamic control system with a system for adjusting drive torque distribution between drive wheels on the same axle

Système de réglage de la dynamique de conduite pour véhicule automobile avec un système de contrôle de distribution du couple entre les roues motrices d'un axe commun

(84) Benannte Vertragsstaaten:
**DE FR GB IT**

(30) Priorität: **02.09.2005 DE 102005041745**

(43) Veröffentlichungstag der Anmeldung:
**07.03.2007 Patentblatt 2007/10**

(73) Patentinhaber: **Bayerische Motoren Werke Aktiengesellschaft**
**80809 München (DE)**

(72) Erfinder: **Hofmann, Martin**
**80687 München (DE)**

(56) Entgegenhaltungen:
**DE-A1- 4 305 155          DE-A1- 10 226 683**
**DE-A1- 19 838 336**

## Beschreibung

Die Erfindung betrifft ein Fahrdynamik-Regelsystem für ein zweispuriges, mehrachsiges Kraftfahrzeug mit einem System zur Veränderung der Radaufstandskräfte sowie mit einem System zur beliebigen Veränderung der Antriebsmomentverteilung zwischen den beiden angetriebenen Rädern einer Achse, über das eine die Fahrdynamik stabilisierende Gierratenregelung im weiteren Sinne durchgeführt wird, wobei diesem Gierratenregler ein Schlupfregler unterlagert ist.

Hinsichtlich des Systems zur beliebigen Veränderung der Antriebsmomentverteilung zwischen den beiden Rädern einer Achse eines zweispurigen Kraftfahrzeugs wird beispielshalber auf die EP 0 548 853 B1 verwiesen, wobei solche Systeme auch als Systeme zur Quermomentenverteilung bezeichnet werden. Ein Fahrdynamik-Regelsystem nach dem Oberbegriff des Anspruchs 1 ist beispielsweise in der DE 198 38 336 A1 als System zur Steuerung der Bewegung eines Fahrzeugs bekannt, welches aus mehreren Ebenen besteht. In einer ersten Ebene ist dabei wenigstens eine Komponente zur Steuerung der Fahrzeugbewegung vorgesehen, welche in einer weiteren Ebene in einer Verfeinerung wenigstens eine Komponente Vortrieb und Bremse umfasst. In einer dritten Verfeinerungsebene ist diese Komponente wenigstens in Komponenten Vortrieb und Bremssystem strukturiert.

Grundsätzlich bestehen vielfältige Möglichkeiten, auf die Fahrdynamik eines zweispurigen Kraftfahrzeugs Einfluss zu nehmen bzw. diese insbesondere in instabilen Fahrzuständen möglichst sicher und stabil zu gestalten. Insbesondere soll hierbei die Abweichung zwischen der tatsächlichen Ist-Gierrate und der sich insbesondere aus dem Lenkwunsch des Fahrers und der Fzg.-Längsgeschwindigkeit ergebenden Soll-Gierrate minimal sein. Ein entsprechender Regelvorgang zur Minimierung der Gierraten-Abweichung soll dabei in einer für den Fahrer bzw. die Fahrzeug-Insassen komfortablen Weise erfolgen, d.h. die allgemein verwendete Methode durch gezielten asymmetrischen Bremseneingriff oder Herabsetzung des vom Kfz-Antriebsaggregat abgegebenen Antriebsmoments (wie beim bekannten ESP) ist dabei weniger wünschenswert, wenngleich äußerst effizient.

Hiermit soll nun ein Fahrdynamik-Regelsystem für ein Kraftfahrzeug nach dem Oberbegriff des Anspruchs 1 aufgezeigt werden, das eine komfortablere Stabilisierung ohne spürbare Veränderung der Fzg.-Längsdynamik ermöglicht, zumindest soweit, als die hiermit vorgeschlagenen Maßnahmen für eine erfolgreiche Fzg.-Stabilisierung ausreichend sind (= Aufgabe der vorliegenden Erfindung).

Die Lösung dieser Aufgabe ist dadurch gekennzeichnet, dass der Schlupfregler über eine Veränderung der Radaufstandskräfte ein Abreißen des Längskräfte übertragenden Kontakts zwischen den angetriebenen Rädern und der Fahrbahn verhindert, wobei aus den jeweiligen Rad-Antriebsmomenten im Sinne einer Vorsteuerung unter Verwendung eines geschätzten oder gemessenen Wertes für den Reibwert zwischen den angetriebenen Rädern und der Fahrbahn zugeordnete Soll-Radaufstandskräfte für die jeweiligen angetriebenen Räder bestimmt und nur bedarfsweise eingestellt werden und wobei dieser Vorsteuerung eine Schlupfregelung überlagert ist, welche die Abweichung zwischen der festgestellten Drehzahldifferenz der angetriebenen Räder und der dem jeweiligen Fahrzustand entsprechenden Drehzahldifferenz durch geeignete Änderung der Radlast-Verteilung zu minimieren versucht.

Grundsätzlich bekannt sind sowohl eine Schlupfregelung als auch eine Fahrdynamikregelung durch aktive Radlastverteilung, ferner auch eine Fahrdynamikregelung durch Veränderung Antriebskraftverteilung zwischen der linken und der rechten Fzg.-Seite (bzw. zwischen den entsprechenden Rädern) mittels eines sog. Systems zur Quermomentenverteilung, jedoch werden bislang diese einzelnen Ansätze jeweils für sich behandelt und können daher in Kombination zu Störungen untereinander führen. Auch müssen bislang bei der Auslegung der Einzelsysteme Kompromisse gemacht werden, wohingegen individuelle Stärken, die erst im Systemverbund hervortreten können, nicht ausgeschöpft werden können, so dass die Leistung des Systemverbundes nicht mehr oder sogar weniger als die Summe der Einzelleistungen ist. Bei vielen der bekannten Systeme liegt ferner ein Zielkonflikt zwischen der Querdynamikregelung und der Längsdynamikregelung am Fahrzeug vor. Soll bspw. eine Schlupfregelung und/oder eine Fahrdynamikregelung alleine über die sog. Quermomentenverteilung (entweder an der angetriebenen Fzg.-Hinterachse oder an der angetriebenen Fzg.-Vorderachse) realisiert werden, so ist der limitierende Faktor die Aufstandskraft an den jeweiligen Rädern. Bei einem leistungsübersteuernden Fahrzeug mit einem System zur Quermomentenverteilung an der Hinterachse würde ein ausdrehendes, d.h. nach kurvenaußen drehendes Giermoment benötigt, was aber aufgrund fehlender Aufstandskraft am kurveninneren Rad bspw. nicht dargestellt werden kann.

Daher wird hiermit vorgeschlagen, die Aufstandskraft an einer angetriebenen Achse und die Antriebsmomente an den beiden Rädern dieser Achse in Kombination so zu verteilen, dass eine Schlupfregelung für optimale Traktion bei gleichzeitiger, unabhängiger Aufprägung eines Giermomentes durch unterschiedliche Reifenlängskräfte möglich ist, um somit auch die Gierrate regeln zu können. Damit kann der Zielkonflikt zwischen optimaler Fzg.-Querdynamikregelung und optimaler Fzg.-Längsdynamikregelung aufgelöst werden.

Zur Regelung der Querdynamik dient ein Gierratenregler, und zwar vorzugsweise ein solcher im weiteren Sinne. Demnach wird der Gierraten-Sollwert aus dem Lenkwinkel und der Fahrgeschwindigkeit über den sog. Ackermannfaktor bestimmt. Vorzugsweise erfolgt außerdem eine Limitierung des Gierraten-Sollwertes bei kleinen Reibwerten über die Querbeschleunigung. Unter Berücksichtigung der aktuell im Fahrzeug gemessenen Gierrate ergibt sich dann ggf. eine Regeldifferenz, die über einen geeigneten Regler in ein zu stellendes Moment für das System zur Quermomentenverteilung (= System zur beliebigen Veränderung der Antriebsmomentverteilung) umgerechnet wird, d.h. das System zur beliebigen Veränderung der Antriebsmomentverteilung zwischen den beiden angetriebenen Rädern einer Achse wird so angesteuert, dass eine Abweichung zwischen der Ist-Gierrate und der Soll-Gierrate des Fahrzeugs durch geeignete Veränderung der Antriebsmomentverteilung an den angetriebenen Rädern reduziert, insbesondere minimiert wird.

Um dabei das möglicherweise auftretende Problem zu lösen, dass bei zu hohem an eines Antriebsräder angelegtem Antriebsmoment ein Abreißen des Längskräfte übertragenden Kontakts zwischen diesem Rad und der Fahrbahn erfolgt (so dass keine Reifenlängskraft mehr übertragen werden könnte), wird dem genannten Gierratenregler ein Schlupfregler unterlagert, der über die Veränderung der Radaufstandskraft das sog. "Abreißen" dieses Rades verhindert. Prinzipiell kann dieser Schlupfregler dem in der nicht vorveröffentlichten deutschen Patentanmeldung 10 2005 004 601.0 (= WO 2006/081984 A1) beschriebenen Fahrdynamik-Steuerungs- oder Regelsystem entsprechen. In dieser nicht vorveröffentlichten Patentanmeldung wird davon ausgegangen, dass ein offenes Differential bei Hinterachsantrieb vorliegt und somit eine Momentenverteilung von 50:50 gegeben ist. Um einen entsprechenden Schlupfregler in das hier beschriebene Konzept zu übernehmen, ist im wesentlichen anstelle der festen Momenten-Aufteilung die vom genannten System zur Quermomentenverteilung vorgegebene Antriebskraftverteilung für eine Vorsteuerung vorzugeben, welche im weiteren kurz beschrieben wird.

Bekanntlich wird die Verteilung der Aufstandskräfte eines Fahrzeuges im wesentlichen bestimmt durch die Längsbeschleunigung, durch die Querbeschleunigung und durch den sog. Wankmomentenfaktor (= *croll*) des Fahrzeugs bzw. eines in diesem integrierten Systems zur Wankmomentabstützung. Bei einem solchen System zur Wankmomentenabstützung, mit welchem die Aufstandskräfte an den einzelnen Fzg.-Rädern veränderbar sind, kann es sich um sog. aktive geteilte Stabilisatoren, deren Stabilisatorhälften gegeneinander verdrehbar sind, handeln. Zusätzlich können den einzelnen Fahrzeug-Rädern zugeordnete hinsichtlich ihrer Charakteristik verstellbare Dämpfer vorgesehen sein, die dann vom Regelsystem geeignet angesteuert werden. Es kann aber das System zur Veränderung der Aufteilung der Radaufstandskräfte auch den einzelnen Rädern zugeordnete aktive Federungssysteme aufweisen, die geeignet angesteuert werden. Insbesondere fallen hierunter Systeme mit sog. Fußpunktverschiebung der zwischen den Rädern und dem Fzg.-Aufbau vorgesehenen Tragfedern.

Wird nun eine bestimmte Aufstandskraft an einem Rad einer Achse benötigt, kann über ein inverses statisches Fahrzeugmodell der dafür benötigte Wankmomentenfaktor *croll_soll* wie folgt berechnet werden:

Für die Einstellung einer Aufstandskraft an der Hinterachse (HA) gilt:

$$croll\_soll = 0.5 * (- 2 * Fz\_HA * ll * spurw + lv * mass * g * spurw - 2 * mass * ay$$
$$* cgh * ll + mass * ax * cgh * spurw) / mass / ay / cgh / ll$$

mit *Fz_HA* = Soll-Radaufstandskraft an der Hinterachse, *ll* = Radstand, *spurw* = Spurweite, *lv* = Abstand des Fzg.-Schwerpunkts zur Vorderachse, *lh* = Abstand Fzg.-Schwerpunkt zur Hinterachse, *mass* = Fzg.-Masse, *g* = Gravitationskonstante, ay = Querbeschleunigung, cgh = Schwerpunktshöhe des Fahrzeugs, ax = Fzg.-Längsbeschleunigung, wobei "*" für eine Multiplikation, "/" für eine Division und "+" für eine Addition sowie "-" für eine Subtraktion bzw. ein negatives Vorzeichen steht.

Für die Einstellung einer Aufstandskraft an der Vorderachse (VA) gilt:

$$croll\_soll = -0.5 * spurw * (2 * Fz\_VA * ll - lh * mass * g + mass * ax * cgh) /$$
$$mass / ay / cgh / ll$$

mit *Fz_VA* = Soll-Radaufstandskraft an der Vorderachse.

Dabei erfolgt eine Vorsteuerung über das vom System zur Quermomentenverteilung für das linksseitige bzw. rechtsseitige Antriebsrad angeforderte Antriebsmoment *M_QMV*. Die Umrechnung dieses radindividuellen Antriebsmoments in eine radindividuelle Aufstandskraft erfolgt dabei wie folgt:

$$Fz\_links = M\_QMV\_links * 1/(r\_Rad * mue) \text{ bzw.}$$

$$Fz\_rechts = M\_QMV\_rechts * 1/(r\_Rad * mue)$$

Dabei ist *mue* der Kraftschlusskoeffizient zwischen Reifen und Strasse, der entweder (indirekt) gemessen oder geschätzt werden kann und *r_Rad* der Rad-Halbmesser.

Damit ist die Vorsteuerung in der Lage, jederzeit je nach vom System zur Quermomentenverteilung angefordertem Moment die radindividuellen Aufstandskräfte so zu verteilen, dass kein Rad "abreißt". Ein Eingriff soll dabei nur dann erfolgen, wenn die Aufstandskraft an einem der beiden angetriebenen Räder zu gering werden würde. Im Normalfahrbetrieb soll somit kein Eingriff der Vorsteuerung erfolgen, d.h. hier kann der sog Wankmomentenfaktor *croll* bspw. über eine von der Fzg.-Fahrgeschwindigkeit abhängige Kennlinie vorgegeben sein.

Wie ersichtlich sollte für diese Vorsteuerung der Kraftschlusskoeffizient mue zwischen Reifen und Fahrbahn bekannt sein. Wenn der tatsächliche Wert dieses Kraftschlusskoeffizienten niedriger ist als der in der Vorsteuerung verwendete Wert, so wird die Aufstandskraft zu niedrig berechnet. Um für diesen Fall den Wankmomentenfaktor geeignet anzupassen, ist der vorgeschlagenen Vorsteuerung eine Schlupfregelung überlagert. Diese wird im Folgenden beschrieben.

Eine Schlupfregelung eines Systems zur Veränderung der Radaufstandskräfte kann zwar nicht den absoluten Schlupf an den angetriebenen Fzg.-Rädern regeln, da hiermit definitionsgemäß kein Antriebsmomenten-Eingriff möglich ist, nachdem dieser über das System zur beliebigen Veränderung der Antriebsmomentenverteilung erfolgt. Jedoch kann ein Schlupfregler die Differenzdrehzahl der beiden angetriebenen Fzg.-Räder regeln, wobei sich die Solldrehzahldifferenz *omega_diff_soll* aus der Soll-Gierrate *psip* und der Spurweite *spurw* wie folgt ergibt:

$$omega\_diff\_soll = psip * spurw$$

Die Ist-Drehzahldifferenz *omega_diff_ist* der beiden angetriebenen Räder der Achse ergibt sich direkt aus den messbaren Raddrehzahlen *omega_Rad_rechts* bzw. *omega_Rad_links*:

$$omega\_diff\_ist = omega\_Rad\_rechts - omega\_Rad\_links$$

Nach Normierung über der Referenzgeschwindigkeit V Ref ergibt sich folgende Differenz:

$$omega\_diff\_diff\_norm = (omega\_diff\_soll - omega\_diff\_ist) / V\_Ref / r\_Rad$$

Um den Wankmomentenfaktor *croll* richtig zu stellen, muss die Regeldifferenz also wie folgt berechnet werden:

$$omega\_diff\_diff\_norm\_ARS = (abs(omega\_diff\_soll) - omega\_diff\_ist*sign(omega\_diff\_soll)) / V\_Ref / r\_Rad$$

Diese Größe ist Eingang in einen PI-Regler, dessen Ausgang wiederum der Sollwert für *croll* ist und vom System zur Veränderung der Radaufstandskräfte entsprechend gestellt wird.

Mit den o.g. Funktionen ist es somit möglich, die Längsdynamik und die Querdynamik eines Fahrzeugs innerhalb der jeweiligen Systemgrenzen unabhängig voneinander zu regeln, wobei die Leistung des Gesamtverbundes höher ist als Summe der Einzelsysteme. So kann eine Gierratenregelung auch bei größtmöglicher Traktion durchgeführt werden. Dadurch müssen bspw. ein das Fahrverhalten ebenfalls stabilisierender Eingriff in das Fzg.-Bremssystem oder eine Reduktion des vom Fzg.-Antriebsaggregat abgegebenen Antriebsmoments überhaupt nicht durchgeführt werden oder zumindest erst nennenswert später, nämlich wenn sich herausstellt, dass das Potential der Gierraten-Regelung durch die vorgeschlagene Veränderung der Antriebsmomentverteilung zwischen den beiden angetriebenen Rädern einer Achse nicht ausreicht, wobei noch darauf hingewiesen sei, dass durchaus eine Vielzahl von Details abweichend von obigen Erläuterungen gestaltet sein kann, ohne den Inhalt der Patentansprüche zu verlassen.

**Patentansprüche**

1. Fahrdynamik-Regelsystem für ein zweispuriges, mehrachsiges Kraftfahrzeug mit einem System zur Veränderung der Radaufstandskräfte sowie mit einem System zur beliebigen Veränderung der Antriebsmomentverteilung zwischen den beiden angetriebenen Rädern einer Achse, über das eine die Fahrdynamik stabilisierende Gierratenregelung im weiteren Sinne durchgeführt wird wobei diesem Gierratenregler ein Schlupfregler unterlagert ist, **dadurch gekennzeichnet, dass** der Schlupfregler über eine Veränderung der Radaufstandskräfte ein Abreißen des Längskräfte übertragenden Kontakts zwischen den angetriebenen Rädern und der Fahrbahn verhindert, wobei aus den jeweiligen Rad-Antriebsmomenten im Sinne einer Vorsteuerung unter Verwendung eines geschätzten oder gemessenen Wertes für den Reibwert zwischen den angetriebenen Rädern und der Fahrbahn zugeordnete Soll-Radaufstandskräfte für die jeweiligen angetriebenen Räder bestimmt und nur bedarfsweise eingestellt werden und wobei dieser Vorsteuerung eine Schlupfregelung überlagert ist, welche die Abweichung zwischen der festgestellten Drehzahldifferenz der angetriebenen Räder und der dem jeweiligen Fahrzustand entsprechenden Drehzahldifferenz durch geeignete Änderung der Radlast-Verteilung zu minimieren versucht.

2. Fahrdynamik-Regelsystem nach Anspruch 1 **dadurch gekennzeichnet, dass** das Regelsystem zur Veränderung der Aufteilung der Radaufstandskräfte sog. aktive geteilten Stabilisatoren, deren Stabilisatorhälften gegeneinander verdrehbar sind, geeignet ansteuert.

3. Fahrdynamik-Regelsystem Anspruch 2, **dadurch gekennzeichnet, dass** das Regelsystem zur Veränderung der Aufteilung der Radaufstandskräfte zusätzlich den einzelnen Fahrzeug-Rädern zugeordnete hinsichtlich ihrer Charakteristik verstellbare Dämpfer geeignet ansteuert.

4. Fahrdynamik-Regelsystem nach einem der vorangegangenen Ansprüche, **dadurch gekennzeichnet, dass** das Regelsystem zur Veränderung der Aufteilung der Radaufstandskräfte den einzelnen Rädern zugeordnete aktive Federungssysteme geeignet ansteuert.

5. Fahrdynamik-Regelsystem nach einem der vorhergehenden Ansprüche, **dadurch gekennzeichnet, dass** eine Gierraten-Regelung durch Bremseingriff oder Veränderung des Antriebsmoments erst dann durchgeführt wird, nachdem das Potential der Gierraten-Regelung durch geeignete Veränderung der Antriebsmomentverteilung ausgeschöpft ist.

6. Fahrdynamik-Regelsystem nach einem der vorhergehenden Ansprüche, **dadurch gekennzeichnet, dass** der Gierraten-Sollwert bei kleinen Reibwerten über die Querbeschleunigung limitiert ist.

**Claims**

1. A driving dynamic control system for a two-track, multi-axle motor vehicle with a system for changing the wheel contact forces and with a system for random changing of the drive torque distribution between the two driven wheels of an axle, by means of which a yaw rate control stabilising the driving dynamics is carried out in the broader sense, a slip controller being subordinate to this yaw controller, **characterised in that** the slip controller prevents a breaking of the contact transmitting longitudinal forces between the driven wheels and the road by means of a change in the wheel contact forces, wherein desired wheel contact forces allocated between the driven wheels and the road, for the respective driven wheels, are determined from the respective wheel drive torques in the sense of a pilot control using an estimated or measured value for the coefficient of friction and are only adjusted if necessary and wherein a slip control is superimposed on this pilot control, which slip control attempts to minimise the deviation between the established rotational speed difference of the driven wheels and the rotational speed difference corresponding to the respective driving state by a suitable change in the wheel load distribution.

2. A driving dynamic control system according to claim 1, **characterised in that** the control system suitably activates so-called active divided stabilisers, the stabiliser halves of which can be rotated relative to one another, to change the distribution of the wheel contact forces.

3. A driving dynamic control system according to claim 2, **characterised in that** the control system for changing the distribution of the wheel contact forces additionally suitably activates dampers which can be adjusted with respect to their characteristics and are associated with the individual vehicle wheels.

**4.** A driving dynamic control system according to any one of the preceding claims, **characterised in that** the control system for changing the distribution of the wheel contact forces suitably activates active suspension systems associated with the individual wheels.

**5.** A driving dynamic control system according to any one of the preceding claims, **characterised in that** a yaw rate control by a braking intervention or a change in the drive torque is only carried out once the potential of the yaw rate control has been exhausted by a suitable change in the drive torque distribution.

**6.** A driving dynamic control system according to any one of the preceding claims, **characterised in that** the yaw rate desired value is limited in the case of small coefficients of friction via the transverse acceleration.

**Revendications**

**1.** Système de régulation de la dynamique de conduite d'un véhicule automobile à deux voies et plusieurs essieux comprenant un système pour modifier les forces d'appui des roues ainsi qu'un système pour modifier de manière quelconque la distribution du couple moteur entre les deux roues motrices d'un essieu, permettant d'effectuer dans un sens large, une régulation de la vitesse de lacet stabilisant la dynamique de conduite, le régulateur de vitesse de lacet comportant un régulateur de patinage,

**caractérisé en ce que**

le régulateur de patinage évite, par une modification des forces d'appui de roue, le décrochage du contact transmettant les forces longitudinales entre les roues motrices et la chaussée, et

à partir du couple moteur de roue, respectif, dans le sens d'une commande préalable en utilisant une valeur évaluée ou mesurée du coefficient d'adhérence entre les roues motrices et la chaussée, on détermine des efforts d'appui de roue de consigne, associés aux roues motrices respectives et on ne règle que si nécessaire, et

cette commande préalable est combinée à une régulation antipatinage qui minimise l'écart entre la différence de vitesse de rotation de roue constatée pour les roues motrices et la différence de vitesse de rotation correspondant à l'état de conduite respectif par une modification appropriée de la répartition de la charge de roue.

**2.** Système de régulation de la dynamique de conduite selon la revendication 1,

**caractérisé en ce que**

pour modifier la répartition des forces d'appui de roue, le système de régulation commande de manière appropriée des stabilisateurs divisés de répartition active dont les moitiés de stabilisateur peuvent tourner l'une par rapport à l'autre.

**3.** Système de régulation de la dynamique de conduite selon la revendication 2,

**caractérisé en ce que**

pour modifier la répartition des forces d'appui de roue, le système de régulation commande en outre de manière appropriée des amortisseurs à caractéristique réglable, associés aux différentes roues du véhicule.

**4.** Système de régulation de la dynamique de conduite selon les revendications précédentes,

**caractérisé en ce que**

pour modifier la répartition des forces d'appui de roue, le système de régulation commande des systèmes de suspension active associés aux différentes roues.

**5.** Système de régulation de la dynamique de conduite selon les revendications précédentes,

**caractérisé en ce qu'**

on effectue une régulation de la vitesse de lacet par action sur les freins ou par modification du couple moteur seulement après épuisement du potentiel de régulation de la vitesse de lacet par une modification appropriée de la répartition du couple moteur.

**6.** Système de régulation de la dynamique de conduite selon les revendications précédentes,

**caractérisé en ce que**

la valeur de consigne de la vitesse de lacet est limitée par l'accélération transversale pour des coefficients d'adhérence faibles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0548853 B1
- DE 19838336 A1
- DE 102005004601
- WO 2006081984 A1